# NEUE EUROPÄISCHE PATENTSCHRIFT

(11) **EP 2 129 504 B2**
(45) Veröffentlichungstag und Bekanntmachung des Hinweises auf die Entscheidung über den Einspruch: **04.09.2019**
(45) Hinweis auf die Patenterteilung: 23.05.2012
(21) Anmeldenummer: 08718010.5
(22) Anmeldetag: 19.03.2008
(51) Int. Cl.: B29C 41/08, B29C 41/18, B29C 41/22, B29C 41/46, B29C 37/00, B60R 21/215

(54) **VERFAHREN ZUR HERSTELLUNG VON FORMHÄUTEN AUS MEHREREN KUNSTSTOFFEN MIT VERBESSERTEM VERHALTEN BEIM AIRBAGSCHUSS BEI NIEDRIGEN TEMPERATUREN**
METHOD FOR THE PRODUCTION OF MOLDED SKINS FROM A PLURALITY OF PLASTIC MATERIALS HAVING IMPROVED PROPERTIES DURING AIRBAG DEPLOYMENT AT LOW TEMPERATURES
PROCÉDÉ DE FABRICATION DE PELLICULES FORMÉES À PARTIR DE PLUSIEURS PLASTIQUES PRÉSENTANT UN MEILLEUR COMPORTEMENT LORS DE L'OUVERTURE DE L'AIRBAG À BASSES TEMPÉRATURES

(30) Priorität: 21.03.2007 DE 102007013449; 16.01.2008 WO PCT/EP2008/050413
(43) Veröffentlichungstag der Anmeldung: 09.12.2009
(73) Patentinhaber: Johnson Controls Interiors GmbH & Co. KG, 47929 Grefrath (DE)
(72) Erfinder: DECHER, Heribert, 30890 Barsinghausen (DE); ANDRE, Walter, 29699 Bomlitz (DE); PARZELSKI, Zbigniew, 381 24 Braunschweig (DE); SANDER, Marko, 31249 Hohenhameln (DE); SEIDEL, Christian, 30163 Hannover (DE); HEIDKAMP, Michael, 29386 Dedelstorf (DE)
(74) Vertreter: Trinks, Ole
(86) Internationale Anmeldenummer: PCT/EP2008/053284
(87) Internationale Veröffentlichungsnummer: WO 2008/113817

(56) Entgegenhaltungen:
- DE-A1- 19 800 287
- JP-A- 11 348 057
- JP-A- 60 208 210
- US-A- 5 288 103
- US-A- 5 370 831
- US-A- 5 429 784
- US-A- 5 863 064
- US-A1- 2004 099 988

## Beschreibung

Die Erfindung betrifft ein Verfahren und eine Vorrichtung zur Herstellung von Kunststoff-Formhäuten, insbesondere für Kraftfahrzeuginnenteile wie z.B. Armaturenbretter und Türverkleidungen, wobei die Kunststoff-Formhäute durch ein nacheinander erfolgendes mehrfaches kontinuierliches Anschmelzen von mehreren Kunststoffmaterialien unterschiedlicher Eigenschaft an Oberflächebereichen eines erwärmten Formwerkzeuges aufgebaut werden.

Bekannt sind solche Verfahren zur Herstellung von Kunststoff-Formhäuten durch nacheinander erfolgendes Anschmelzen von mehreren Kunststoffpulvern bei der Herstellung zweifarbiger Kunststoff-Formhäute, bei denen in aller Regel Masken zur Abdeckung einzelner Bereiche genutzt werden.

Die EP 0 972 625 A1 beschreibt hierzu eine Einrichtung, nämlich eine Werkzeugform zur Herstellung von zweifarbigen Kunststoff-Formhäuten für Kraftfahrzeugteile, d.h. im Wesentlichen Armaturenbretter, Türverkleidungen etc. Das hier angewandte Herstellungsverfahren zur Erzeugung von Sinterfolien / Slushhäuten ist ein Rotationssintern, bei dem sich ein Kunststoffpulver in der rotierenden Werkzeugform befindet und an entsprechend geheizten Wandteilen der Werkzeugform anschmilzt.

Die hier gezeigte Einrichtung weist zwei verschiedene untere Teile der Werkzeugformkästen auf. Die unteren Teile der Werkzeugformkästen, welche jeweils auch das Pulverbett beinhalten, sind lösbar angeordnet in Bezug auf den einzigen oberen Werkzeugformkasten, an welchen das Kunststoffpulver anschmilzt. Für die Herstellung von zweifarbigen Kunststoff-Formhäuten weist nun der erste untere Formkasten einen schalenförmige und in den Innenraum ragenden Vorsprung auf, mit dem - wie mit einer Maske - Teile des oberen Formkastens abgedeckt werden.

In einem ersten Arbeitsgang wird durch Rotationssintern ein Pulver einer ersten Farbe angeschmolzen, wobei die unter der schalenförmigen Abdeckung liegenden Bereiche des oberen Formkastens nicht getroffen werden und somit frei von Pulver bleiben.

Vor einem zweiten Arbeitsgang wird der erste untere Formkasten durch einen zweiten unteren Formkasten ersetzt, der ein Pulver einer anderen Farbe beinhaltet und keine Abdeckungen aufweist. Beim nachfolgend wiederholten Rotationssintern schmilzt an dem vorher freigehaltene Bereich des oberen Formkastens und auf der Rückseite der schon bestehenden Formhaut das Pulver mit der neuen Farbe an. Nach Abkühlung und Entnahme der Formhaut aus dem Werkzeug erhält man auf der dem Werkzeug zugewandten und zukünftigen Außenseite eine zweifarbige Kunststoff-Formhaut.

Während des ersten Arbeitsschrittes muß die hierzu die schalenförmige und in den Innenraum ragende Abdeckung des unteren Formkasten sorgsam gegenüber dem oberen Formkasten abgedichtet werden, damit kein Sinterpulver der ersten Farbe in den Abdeckbereich gelangt. Hierzu weist der schalenförmige Vorsprung an seine Rändern Dichtungselemente auf, die elastisch und oder/innen hohl ausgebildet sind und ggf. innen mit Druck oder elastischen Medien beaufschlagt werden können.

Von Nachteil ist hierbei der durch die Notwendigkeit zur Verwendung von Abdeckungen / Masken entstehende hohe Arbeitsaufwand zum Wechsel der unteren Kastenformen sowie die schwierige Dichtung der Maske, d.h. der Dichtung zwischen den Rändern der schalenförmigen und in den Innenraum ragenden Abdeckung des unteren Formkasten und der Innenseite des oberen Formkastens. Hierbei führen Wärmedehnungen und unterschiedliche und durch komplizierte Innenformen des oberen Formkastens bedingte Druckverhältnisse der Dichtungen zu Undichtigkeiten und unregelmäßiger Anlage, wodurch die Farbgrenzen verwischen können.

Ähnlich verhält es sich bei dem durch die WO 2004/082917 offenbarten Pulversinterverfahren mit mehreren Bepulverungsschritten. Bei diesem Verfahren ist die Verwendung einer Maske und einer an der Maske befindlichen aufblasbaren Dichtung erfindungswesentlich, die seitlich an und zwischen Begrenzungsstegen anliegt und durch das Aufblasen die Maske selbsttätig festklemmt. So wird zunächst bei eingespannter Maske ein erster Bepulverungsschritt durchgeführt, danach die Maske entnommen und ein weiteres Mal ein Pulversintern durchgeführt. Auch wenn hier die dazu erforderlichen Pulverkästen an sich einfacher aufgebaut sein können, so ist doch die Handhabung mehrerer schwerer Kästen mit unterschiedlichen Pulverarten in der Serienherstellung eher als Nachteil anzusehen.

Die US 5,234,653 beschreibt ein Verfahren zur Herstellung von mehrfarbigen Kunststoff-Formhäuten durch Sintern, bei dem sich ein Kunststoffpulver in einer durch Trennwände aufgeteilten Werkzeugform befindet und an entsprechend geheizten Wandteilen der Werkzeugform anschmilzt. Die Fixierung der Trennwände erfolgt dabei über Drucksysteme innerhalb der Trennwände. Durch das Drucksystem werden die Trennwände mit Hilfe von Dichtungsprofilen zwischen unterer und obere Werkzeugform verspannt und sorgen so für eine sichere Abdichtung bei den jeweiligen Sintervorgängen mit unterschiedlichen Farbpulvern.

Auch hier besteht ein Nachteil darin, dass eine relativ umständliche Fixierung der Trennwände vorgenommen werden muß und zusätzlich eine hohe Druckkraft für die Drucksysteme erforderlich ist.

Die DE 694 28 377 T2 offenbart ein Verfahren und eine Vorrichtung zur Durchführung eines Sprühformprozess für ein Zwei-Farb-Verfahren, bei dem eine Maske oben auf einen Steg aufgelegt wird, welcher bestimmte Bereiche einer Sprühform begrenzt und von den übrigen Oberflächenbereichen abtrennt. Die Maskenränder stehen dabei zur Sprühseite etwas über. Das elastomere Sprühmaterial, wird dann auf eine Seite der hervorstehenden Kante gespritzt. Danach wird die Maske abgenommen und ein anderes elastomeres Material, beispielsweise eines mit einer anderen Farbe aufgesprüht. Offenbart ist anhand der in den Ausführungsbeispielen beschriebenen Materialen ein Verfahren zum Sprühen flüssiger Komponenten. Sprühverfahren mit mehreren unterschiedlichen flüssigen Materialien sind jedoch allein aufgrund der erforderlichen Lösungsmittelmengen nicht einfach in industriellen Serien-Herstellungsprozessen zu handhaben.

Aus den "Patent Abstracts of Japan" ist mit der Publikationsnummer 1 134 8057 eine japanische Veröffentlichung bekannt, die ein kombiniertes Sprüh- und Sinterverfahren offenbart, bei dem ebenfalls eine Abdeckung einzelner Formbereiche durch Masken erfolgt und in einem erster Teilbereich der Form ein erstes Kunststoffpulver aufgesprüht und die Maske danach entfernt wird. In einem weiteren Arbeitsschritt erfolgt dann das Aufsintern des zweiten Kunststoffpulvers auf die noch nicht beschichteten Bereiche der Form und auf die bereits mit dem ersten Pulver besprühten Bereiche. Auch hier ist die relativ umständliche Handhabung der Masken nachteilig.

US 5,288,103 offenbart eine Airbagabdeckung aus einer PVC-Formhaut. US 5,407,225 offenbart eine Airbagabdeckung aus einer PVC-Formhaut mit einer PU-Schicht auf der Rückseite.

Der Erfindung lag also die Aufgabe zugrunde, eine Verfahren und eine Vorrichtung zur Herstellung von Kunststoff-Formhäuten aus bereichsweise unterschiedlichen Kunststoffen bereitzustellen, das eine Kunststoff-Formhaut hoher Qualität sicherstellt und bei dem die Eigenschaften und die Anmutung / Haptik der Kunststoffformhaut in weiten Bereichen durch die Wahl der Materialien und Verfahrensschritte sicher auf den Anwendungszweck eingestellt werden kann.

Eine weiter Aufgabe bestand darin, ein Material für Kunststoff-Formhäute bereitzustellen, welches in besonderer Weise geeignet ist, um bei einem Betätigen eines Airbags sicher und ohne Splittern aufreist.

Gelöst wir diese Aufgabe durch die Merkmale des Hauptanspruchs. Vorteilhafte Weiterbildungen sind in den Unteransprüchen erfasst. Ebenfalls offenbart ist eine erfindungsgemäße Vorrichtung zur Durchführung des Verfahrens.

Überraschenderweise hat sich gezeigt, dass die wesentlichen Eigenschaften einer Kunststoff-Formhaut bezüglich Oberflächenanmutung, Form, Farbe und Oberflächenspannung und Haptik durch eine erfindungsgemäß hergestellte nur sehr dünne Deckschicht in Verbindung mit einer darunter liegenden Träger- oder Stützschicht, genau und zielgerichtet einstellbar ist. Außerdem wird durch die unterschiedliche eingestellten und mit einander in der erfindungsgemäßen Weise verbundenen Materialien ein Splittern bzw. ein Partikelflug beim Aufreißen der Kunststoff-Formhaut durch einen Airbagschuß sicher vermieden.

Eine vorteilhafte Weiterbildung des Verfahrens besteht darin, dass das zweite aufgebrachte Kunststoffmaterial ein Kunststoffpulver, ein flüssiger Kunststoff oder ein Plastisol ist, welches durch einen Sprühprozess aufgebracht wird. Dies bringt Vorteile beim Handling und erleichtert das Aufbringen und die Einstellung der Eigenschaften.

Eine weitere vorteilhafte Ausbildung des Verfahrens besteht darin, dass das erste und mittels Rotationssintern auf das Formwerkzeug aufgebrachte Kunststoffpulver in einer Schichtdicke von 500 bis 1500 µm und das zweite durch Sprühen auf die erste Schicht aufgebrachte Kunststoffmaterial in einer Schichtdicke von 150 bis 750 µm aufgebracht werden.

Durch eine solche erfindungsgemäße Verfahrensausbildung ergibt sich in der Verfahrensdurchführung der Vorteil, dass die Schichtdicken der einzelnen Kunststoffmaterialen sehr genau ausgebildet werden können. Weiterhin erfordert der Sprühprozess in dieser Schichtdicke außer einer entsprechend eingerichteten und ggf. robotergeführten Sprüheinrichtung/Sprühpistole keinen größeren maschinellen Aufwand und lässt mangels schwerer bewegter Maschinenteile hohe Taktzeiten in der Serienherstellung realisierbar werden.

Vorteilhafterweise besteht dass zweite auf das Formwerkzeug aufgebrachte Kunststoffpulver aus einem mit einem Füllstoff versetzten thermoplastischen Material. Dies dient ebenso der zielgenauen Anpassung der Oberflächenanmutung, Form, Farbe und Oberflächenspannung und Haptik. Gleiches gilt für eine weitere vorteilhafte Ausbildung, die darin besteht, dass das zweite auf das Formwerkzeug aufgebrachte Kunststoffpulver aus einem mit Glasfasern oder Naturfasern versetzten thermoplastischen Material mit einer Korngröße von 30-300 µm besteht.

Eine weitere vorteilhafte Ausbildung besteht darin, dass die Kunststoff-Formhaut nach Fertigstellung insgesamt eine Shore-Härte von 60 (Shore-A) bis 45 (Shore D) aufweist. Dies ergibt eine besonders ansprechende Haptik der Kunststoff-Formhaut sowie eine Möglichkeit, die mechanischen Werte / Festigkeitswerte der Formhaut zu beeinflussen.

Eine weitere vorteilhafte Ausbildung besteht darin, dass das zweite auf das Formwerkzeug aufgebrachte Kunststoffpulver aus Recyclingmaterial besteht. Damit können überschüssige Kunststoffabschnitte aus vorlaufenden Fertigungen oder alte rücklaufende Kunststoffmaterialien wieder verwendet werden.

Eine weitere vorteilhafte Ausbildung besteht darin, dass die mit Kunststoffpulver unterschiedlicher Eigenschaft versehenen Bereiche der Oberfläche durch auf der Oberfläche des Formwerkzeuges vorspringende Stege voneinander getrennt sind, wobei mindestens einer der durch die Stege begrenzten Bereiche der Oberfläche während eines Anschmelzen eines ersten Kunststoffpulvers mit einer Abdeckung oder Maske versehen wird, die in ihren Randbereichen mit einer Dichtung versehen ist und auf den Stegen aufliegt und wobei die Abdeckung oder Maske vor dem Aufbringen des zweiten Kunststoffpulvers von der Oberfläche des Formwerkzeuges entfernt wird. Durch ein solches Verfahren ist es möglich, einzelne Bereiche der Kunststoff-Formhaut gezielt zu beeinflussen.

Eine weitere vorteilhafte Ausbildung besteht darin, dass die Kunststoffpulver als unterschiedliche Eigenschaft eine unterschiedliche Farbe aufweisen. Hierdurch lassen sich dann auf einfache Weise und mit den beschriebenen Vorteilen z.B. Armaturenbretter herstellen, deren oberer und der Windschutzscheibe zugewandter Teil in einer Farbe und mit einer Pigmentierungsdichte so ausgeführt wird, das störende Reflexionen des Sonnenlichtes vermieden werden.

Eine weitere vorteilhafte Ausbildung besteht darin, dass die Kunststoffpulver als unterschiedliche Eigenschaft eine unterschiedliche Dichte und / oder Schaumigkeit aufweisen. Somit lassen sich auf einfache Weise Oberflächen erzeugen, die etwa in unterschiedlichen Bereichen eine jeweils andere Anmutung oder Haptik aufweisen.

Eine weitere vorteilhafte Ausbildung besteht darin, dass während des Pulversprühens im Verfahrenschritt a) die Temperatur des Formwerkzeuges 190 bis 210°C, vorzugsweise 195°C beträgt. Damit erreicht man im Zusammenwirken mit der kinetischen Energie des Sprühverfahrens und der weiteren Verfahrensausbildung, dass nämlich während des Anschmelzens des ersten Kunststoffpulvers im Verfahrenschritt b) die Temperatur des Formwerkzeuges 200 bis 220°C, vorzugsweise 210°C beträgt, ein erstes leichtes "Anheften" und eine gerade beginnende leichte Koagulation des Sprühpulvers, die zwar ausreicht, um die Pulverteilchen ortsfest zu fixieren, jedoch ein "Durchschmelzen" noch nicht entstehen lässt.

Eine weitere vorteilhafte Ausbildung des Verfahrens besteht darin, dass zur vollständigen Reaktion und Verschmelzung des ersten und zweiten Kunststoffpulvers zu einer homogenen Kunststoff-Formhaut im Verfahrenschritt d) die Temperatur des Formwerkzeuges 225 bis 240°C, vorzugsweise 235°C beträgt. Dadurch erfolgt nun zusammen mit dem zweiten Kunststoffpulver ein ausreichender Wärmeeintrag zur vollständigen Schmelzung und Koagulation und damit zur Ausbildung einer homogenen Kunststoff-Formhaut aus mehreren Schichten / Farben.

Eine weitere vorteilhafte Ausbildung des Verfahrens besteht darin, dass nacheinander mehrere Kunststoffpulver durch Rotationssintern oder durch Pulversprühen auf das Formwerkzeug aufgebrachte aufgebracht werden. Auch dies erlaubt eine präzise und beliebige Ausprägung der Oberfläche und Haptik.

Eine besonders geeignete durch das erfindungsgemäße Verfahren hergestellte Kunststoff-Formhaut für Kraftfahrzeuginnenteile wie z.B. Armaturenbretter und Türverkleidungen, ist gebildet dadurch, dass die außen liegende und mittels Pulversprühverfahren auf das Formwerkzeug aufgebrachte Deckschicht der Kunststoffhaut Polyvinylchlorid (PVC) und die darunter liegende und durch Rotationssintern auf das Formwerkzeug aufgebrachte Trägerschicht der Kunststoffhaut aus einem Kunststoffgemisch von im Wesentlichen 60 bis 90% Polyvinylchlorid (PVC) und 10 bis 40% Polyurethan (PU) besteht. Eine solche Materialausbildung weist durch die damit einhergehende Beeinflussung und Einstellung des Reiß- und Dehnungsverhaltens der Kunststoff-Formhaut eine besondere Eignung auf für eine vorteilhafte Verwendung als Abdeckung von mit Airbag-Auslösegeräten versehenen Bereichen von Innenverkleidungen für Kraftfahrzeuge.

Vorteilhafterweise besteht bei der Kunststoff-Formhaut die untere Schicht aus kälteflexiblem Material, hier insbesondere aus Acrylaten, aus ungesättigten Polyolefinen oder aus Polyurethan. Dadurch wird auch bei Temperaturen bis -40°C ein Splittern bzw. ein Partikelflug beim Aufreißen der Kunststoff-Formhaut durch einen Airbagschuß sicher vermieden. Beim Aufreißen der Kunststoff-Formhaut in einem Airbagschußversuch wird durch die gute Haftung der Schichten untereinander die Partikelflugneigung der oberen Schicht, die sich im allgemeinen unter der Glastemperatur befindet, reduziert, indem die Partikel am kälteflexiblen Material haften.

Vorteilhafterweise kann die zweite Schicht auch mit Schwächungen versehen sein, die durch verschiedene Geräte eingebracht werden können, etwa durch Messer oder durch Laserschneiden.

## Patentansprüche

1. Verfahren zur Herstellung von Kunststoff-Formhäuten, insbesondere für Kraftfahrzeuginnenteile wie z.B. Armaturenbretter und Türverkleidungen, wobei die Kunststoff-Formhäute durch ein nacheinander erfolgendes mehrfaches kontinuierliches Anschmelzen von mehreren Kunststoffmaterialien unterschiedlicher Eigenschaft an Oberflächenbereichen eines erwärmten Formwerkzeuges aufgebaut werden, **dadurch gekennzeichnet, dass**
a) zunächst das erste Kunststoffmaterial als Kunststoffpulver durch ein Rotationssinterverfahren (Rotation eines Pulverkastens) auf das Formwerkzeug aufgebracht und das Formwerkzeug während des Anschmelzens und Ausgelierens des Kunststoffpulvers auf eine erste Temperatur von 180 bis 240 °C erwärmt und gehalten wird, so dass das aufgebrachte erste Kunststoffpulver am Formwerkzeug durch Anschmelzen haftet und eine erste Schicht ausbildet,
b) dass danach ein zweites Kunststoffmaterial als Fläche in einem bestimmten Bereich auf die Rückseite der ersten Schicht durch einen Sprühprozess aufgebracht wird, wobei das zweite Kunststoffmaterial an dem ersten Kunststoffpulver durch Anschmelzen haftet, das Formwerkzeug danach auf eine zweite Temperatur so eingestellt wird, dass das aufgesprühte Kunststoffmaterial auf eine Temperatur von 60 bis 250 °C erwärmt und gehalten wird, wobei das erste Kunststoffpulver und das zweite Kunststoffmaterial vollständig ausreagieren und zu einer homogenen Kunststoff-Formhaut verschmelzen,
c) die so entstandene Kunststoff-Formhaut gekühlt wird, so dass sie aus dem Formwerkzeug entnommen werden kann, wobei
wobei das erste auf das Formwerkzeug aufgebrachte Kunststoffpulver in einer Schichtdicke von 200 bis 15000 µm und das zweite aufgebrachte Kunststoffmaterial in einer Schichtdicke von 50 bis 1700 µm aufgebracht wird.

2. Verfahren nach Anspruch 1, bei dem das zweite aufgebrachte Kunststoffmaterial ein Kunststoffpulver ist, welches durch einen Sprühprozess aufgebracht wird.

3. Verfahren nach Anspruch 1, bei dem das zweite aufgebrachte Kunststoffmaterial ein flüssiger Kunststoff oder ein Plastisol ist, welches durch einen Sprühprozess aufgebracht wird.

4. Verfahren nach einem der Ansprüche 1 bis 3. **dadurch gekennzeichnet, dass** das zweite Kunststoffmaterial auf die Rückseite der ersten Schicht in Bereichen aufgebracht wird, die mit Hilfe von Stegen von den übrigen Bereichen der Rückseite abgetrennt sind.

5. Verfahren nach einem der Ansprüche 1 bis 3, **dadurch gekennzeichnet, dass** beim Aufbringen des zweiten Kunststoffmaterials auf die Rückseite der ersten Schicht die nicht mit dem zweiten Kunststoffmaterial zu beschichtenden Bereichen mit Hilfe von Masken oder Abdeckungen abgedeckt sind.

6. Verfahren nach einem der Ansprüche 1 bis 5, bei dem das erste und mittels Rotationssintern auf das Formwerkzeug aufgebrachte Kunststoffpulver in einer Schichtdicke von 500 bis 1500 µm und das zweite durch Sprühen auf die erste Schicht aufgebrachte Kunststoffmaterial in einer Schichtdicke von 150 bis 750 µm aufgebracht werden.

7. Verfahren nach Anspruch 6, bei dem das zweite durch Sprühen auf die erste Schicht aufgebrachte Kunststoffmaterial in einer Schichtdicke von 250 bis 500 µm aufgebracht wird.

8. Verfahren nach einem der Ansprüche 1 bis 7, **dadurch gekennzeichnet, dass** eines der beiden aufgebrachten Kunststoffmaterialien aus einem mit einem Füllstoff versetzten thermoplastischen Material besteht.

9. Verfahren nach Anspruch 8, **dadurch gekennzeichnet, dass** das erste auf das Formwerkzeug aufgebrachte Kunststoffpulver aus einem mit Glasfasern oder Naturfasern versetzten thermoplastischen Material mit einer Korngröße von 30-300 µm besteht.

10. Verfahren nach einem der Ansprüche 1 bis 9, wobei, zweite aufgebrachte Schicht mit Schwächungsnähten versehen ist.

## Claims

1. Procedure for manufacturing synthetic material moulded skins especially for vehicle interior parts like, e.g., dashboards and door trim panels while the synthetic material moulded skins are built up by multiple continuous melting on performed one after the other of several synthetic materials of different properties on surface areas of a heated mould,
**characterized in that**
a) initially, the first synthetic material is applied to the mould as a synthetic powder using a rotational sintering procedure (rotation of a powder box) and, during the melting on and full gelling of the synthetic powder, the mould is heated up and kept at a first temperature of between 180 and 240° C, and **in that** the first synthetic powder applied adheres to the mould by melting on and forms a first layer,
b) after this, a second synthetic material is applied as a plane in a certain area on the backside of the first layer by a spraying process while the second synthetic material adheres to the first synthetic material by melting on, then, the mould is adjusted to a second temperature such that the synthetic material sprayed on heats up to a temperature of between 60 and 250 °C, while the first synthetic powder and the second synthetic material fully cure and fuse together to a homogenous synthetic material moulded skin,
c) the synthetic material moulded skin so created is cooled down to allow its removal from the mould while the first synthetic material powder applied to the mould is applied in a layer thickness of 200 and 15000 µm and the second synthetic material is applied in a layer thickness of 50 and 1700 µm.

2. Procedure as claimed in Claim 1 in which the second synthetic material applied is a synthetic material powder which is applied by a spraying process.

3. Procedure as claimed in Claim 1 in which the second synthetic material applied is a liquid synthetic material or a plastisol which is applied by a spraying process.

4. Procedure as claimed in any Claim 1 through 3,
**characterized in that**
the second synthetic material is applied on the rear side of the first layer in areas which have been separated from the other areas of the rear side by webs.

5. Procedure as claimed in any Claim 1 through 3,
**characterized in that**
when applying the second synthetic material to the rear side of the first layer, the areas not be coated by the second synthetic material, are covered using masks or covers.

6. Procedure as claimed in any Claim 1 through 5, in which the first synthetic powder applied to the mould by rotational sintering is applied in a layer thickness of 500 and 1500 µm and the second synthetic material applied to the first layer by spraying is applied in a layer thickness of 150 and 750 µm.

7. Procedure as claimed in Claim 6, in which the second synthetic material applied by spraying on the first layer is applied in a layer thickness of 250 and 500 µm.

8. Procedure as claimed in any Claim 1 through 7,
**characterized in that**
one of the two synthetic materials applied consists of a thermoplastic material mixed with a filler material.

9. Procedure as claimed in Claim 8,
**characterized in that**
the first synthetic material powder applied to the mould consists of a thermoplastic material having a grain size of 30-300 µm mixed with glass fibres or natural fibres.

10. Procedure as claimed in any Claim 1 through 9 while the second layer applied is provided with weakening seams.

## Revendications

1. Procédé de fabrication de revêtements moulés en matière plastique, en particulier pour des pièces destinees à l'intérieur d'un véhicule automobile, telles que tableaux de bord et habillages de portes, les revêtements moulés en matiere plastique étant formés par fusions continues multiples consécutives de plusieurs matériaux plastiques aux propriétés différenciées sur des zones de surface d'un outil de moulage chauffé,
**caractérisé**:
a) **en ce que** le premier matériau plastique est d'abord appliqué sous forme de poudre plastique sur l'outil de moulage par moulage par centrifugation (rotation d'un moule contenant de la poudre), et l'outil de moulage est chauffé et maintenu à une première température comprise entre 180 et 240 °C pendant la fusion et la gélification de la poudre plastique, de telle manière que la première poudre plastique appliquée adhere à l'outil de moulage par fusion et forme une première couche,
b) **en ce qu'**un deuxième matériau plastique est ensuite appliqué en tant que surface dans une certaine zone à l'arriére de la première couche par pulvérisation, ledit deuxième matériau plastique adhérant à la premiere poudre plastique par fusion, l'outil de moulage étant ensuite réglé à une deuxieme temperature, de telle manière que le matériau plastique pulvérisé est chauffé et maintenu à une température comprise entre 60 et 250°C, la premiere poudre plastique et le deuxième matériau plastique réagissant complètement et formant un revêtement moulé en matière plastique homogène par fusion,
c) **en ce que** le revêtement moulé en matière plastique est refroidi de manière à pouvoir être extrait de l'outil de moulage, la première poudre plastique étant appliquée sur l'outil de moulage avec une épaisseur de couche comprise entre 200 et 15.000 µm et le deuxieme matériau plastique étant appliqué avec une épaisseur de couche comprise entre 50 et 1.700 µm.

2. Procédé selon la revendication 1, où le deuxième matériau plastique appliqué est une poudre plastique, laquelle est appliquée par pulvérisation.

3. Procédé selon la revendication 1, où le deuxième matériau plastique appliqué est une matière plastique liquide ou un plastisol, lesquels sont appliqués par pulvérisation.

4. Procédé selon la revendication 1 à 3,
**caractérisé en ce que**
le deuxième matériau plastique est appliqué sur la face arrière de la première couche dans des zones qui sont séparées par des nervures des autres zones de la face arrière.

5. Procédé selon l'une des revendications 1 à 3,
**caractérisé en ce que**
lors de l'application du deuxième matériau plastique sur la face arrière de la première couche, les zones qui ne sont pas à revêtir par le deuxième matériau plastique sont couvertes au moyen de masques ou de caches.

6. Procédé selon l'une des revendications 1 à 5, où la première poudre plastique appliquée par moulage par centrifugation sur l'outil de moulage l'est avec une épaisseur de couche comprise entre 500 et 1.500 µm, et le deuxième matériau plastique appliqué par pulvérisation sur la première couche l'est avec une épaisseur de couche comprise entre 150 et 750 µm.

7. Procédé selon la revendication 6, où le deuxième matériau plastique appliqué par pulvérisation sur la première couche l'est avec une épaisseur de couche comprise entre 250 et 500 µm.

8. Procédé selon l'une des revendications 1 à 7,
**caractérisé en ce**
**qu'**un des deux matériaux plastiques appliqués est un matériau thermoplastique additionné d'un agent de charge.

9. Procédé selon la revendication 8,
**caractérisé en ce que**
la première poudre plastique appliquée sur l'outil de moulage est un matériau thermoplastique renforcé avec des fibres de verre ou des fibres naturelles, dont la granulométrie est comprise entre 30 et 300 µm.

10. Procédé selon l'une des revendications 1 à 9,
**caractérisé en ce que**
la deuxième couche appliquee est pourvue de lignes d'affaiblissement.
